# EUROPÄISCHE PATENTSCHRIFT

(11) **EP 1 579 134 B1**
(45) Veröffentlichungstag und Bekanntmachung des Hinweises auf die Patenterteilung: **28.07.2010**
(21) Anmeldenummer: 03757626.1
(22) Anmeldetag: 06.11.2003
(51) Int. Cl.: F16K 17/26

(54) **ABSPERRORGAN, INSBESONDERE EXPLOSIONSSCHUTZVENTIL**
BLOCKING ELEMENT, ESPECIALLY AN EXPLOSION PROTECTION VALVE
ORGANE D'ARRET, EN PARTICULIER CLAPET ANTI-DEFLAGRANT

(30) Priorität: 22.11.2002 CH 196402; 08.04.2003 CH 633032003
(43) Veröffentlichungstag der Anmeldung: 28.09.2005
(73) Patentinhaber: Rico-Sicherheitstechnik AG, 9100 Herisau (CH)
(72) Erfinder: ZELLWEGER, Jürg, 9104 Waldstatt (CH)
(74) Vertreter: Wenger, René
(86) Internationale Anmeldenummer: PCT/CH2003/000725
(87) Internationale Veröffentlichungsnummer: WO 2004/048828

(56) Entgegenhaltungen:
- EP-A- 0 192 474
- DE-A- 10 213 865
- GB-A- 1 228 079
- US-A- 3 683 957

## Beschreibung

Die Erfindung betrifft ein Explosionsschutzventil gemäss dem Oberbegriff von Anspruch 1.

Derartige Vorrichtungen dienen beispielsweise dazu, die Ausbreitung von Druckwellen und Flammenfronten nach einer Explosion in Rohrleitungen zu verhindern. Im Explosionsfall schliesst das Ventil durch die kinetische Energie der Druckwelle, welche einer Flammenfront vorauseilt. Gattungsmässig vergleichbare Absperrorgane sind beispielsweise durch die DE 28 01 950, DE 102 13 865 oder EP 172 364 bekannt geworden. Ein wichtiger Aspekt bei der passiven mechanischen Explosionsentkoppelung besteht dabei darin, dass der Schliesskörper beim Überschreiten eines definierten Staudrucks innerhalb einer ebenfalls definierten Schliesszeit von der Offenstellung in die Schliessstellung fährt und dort in der geschlossenen Position fixiert wird.

Die bekannten Explosionsschutzventile weisen in der Regel einen im Querschnitt elliptischen Schliesskörper auf. Diese Form wird aus strömungstechnischen Gründen gewählt, um in der Offenstellung eine möglichst ungehinderte Strömung zu gewährleisten. Die Schliesskörper werden dabei aus Stahlblech gedrückt und bilden einen Hohlkörper, um auch die träge Masse so klein wie möglich zu halten. Gemäss der eingangs erwähnten DE 28 01 950 ist der Hohlraum des Ventilkörpers noch mit einem Kunststoff ausgefüllt, der dämpfende Eigenschaften aufweist. Ein Nachteil der bekannten Schliesskörper besteht jedoch darin, dass die gerundete Aussenpartie bei einer Erhöhung der Strömungsgeschwindigkeit eine eben solche Erhöhung des Staudrucks nicht begünstigt. Ein weiterer Nachteil der bekannten Schliesskörper besteht in ihrer relativen Steifigkeit, welche durch die konventionelle Formgebung begünstigt wird. Dies kann beim Aufprall auf den Ventilsitz zu hohen Material-Spannungen im Schliesskörper mit Deformationen des Schliesskörpers führen.

GB 1 228 079 betrifft ein Regulierventil mit einem Ventilkörper, der flanschartige Erhebungen aufweisen kann. Diese Erhebungen bewirken auf Grund der verursachten Turbulenzen einen Druckstau und erlauben dadurch eine Vergrösserung des Abstandes zwischen dem Ventilkörper und dem Gehäuse. Dies bewirkt eine Reduktion der Störanfälligkeit wegen Fremdkörpern.

Es ist daher eine Aufgabe der Erfindung, ein Explosionsschutzventil der eingangs genannten Art zu schaffen, bei dem der Aufbau eines kritischen Staudrucks am Schliesskörper begünstigt wird, ohne bei Normalbetrieb die Strömung zu beeinträchtigen. Diese Aufgabe wird erfindungsgemäss mit einem Explosionsschutzventil gelöst, das die Merkmale im Anspruch 1 aufweist.

Die Störmittel zum Erzeugen einer turbulenten Strömung sind auf der Aussenseite des Schliesskörpers und/oder auf der Innenseite des Gehäuses, insbesondere im Bereich des zwischen dem Schliesskörper in der Offenstellung und dem Gehäuse gebildeten Strömungsquerschnitt angeordnet. Bei zunehmender Strömungsstärke bewirken die Störmittel eine zunehmende Turbulenz und damit einen raschen Anstieg des Staudrucks, womit die Schliessbewegung eingeleitet wird. Durch diese einfache Massnahme hat es sich überraschend gezeigt, dass die Haltekräfte zum Halten des Schliesskörpers in der Offenstellung höher ausgelegt werden können, was wiederum Fehlfunktionen im Normalbetrieb des Ventils vermeidet.

Beim Störmittel handelt es sich um wenigstens eine sich wenigstens teilweise entlang des Strömungsquerschnitts erstreckende Störkante, an welcher wenigstens zwei Wandabschnitte unter einem Winkel von weniger als 180° aneinander stossen. Eine derartige Kante vermag eine laminare Strömung zu brechen und eine Verwirbelung herbei zu führen.

Gemeinsam mit der Störkante können in den Strömungsquerschnitt hineinragende Störringe am Schliesskörper oder am Gehäuse angeordnet sein. Die Störringe können im Querschnitt rechteckig oder kreisförmig ausgebildet sein.

Die Störkante kann beispielsweise am Schliesskörper und insbesondere an seinem Aussendurchmesser angeordnet sein.

Vorzugsweise wird die Konfiguration des Schliesskörpers derart gewählt, dass er wenigstens auf der dem Ventilsitz zugewandten Seiten bezogen auf seinen Querschnitt von seiner Mittelachse bis zum Aussendurchmesser in wenigstens zwei verschieden geneigten bzw. gekrümmten Aussenwandabschnitten verläuft. Diese beiden Wandabschnitte können dabei etwa im Durchmesserbereich des Ventilsitzes aneinander stossen. Denkbar ist selbstverständlich auch eine Kombination gekrümmter und geneigter (gerader Abschnitte). Der Schliesskörper könnte dabei von der Mittelachse bis zum Aussendurchmesser zuerst vorzugsweise etwa elliptisch gekrümmt oder kegelförmig und dann kegelstumpfförmig verlaufen. Bei dieser Mischkonfiguration wird die konventionelle Ellipsenform des Querschnitts nur gerade im äussersten Bereich verändert.

Die Störkante könnte aber ohne weiteres auch am Gehäuse und insbesondere im Verbindungsbereich zweier Gehäusehälften angeordnet sein. Die beiden eine Störkante bildenden Wandabschnitte stossen vorteilhaft unter einem Winkel zwischen 60° und 179°, vorzugsweise unter 120° aneinander. Die aneinander stossenden Wandabschnitte könnten ohne weiteres auch konkav oder konvex gekrümmt sein.

Es ist schliesslich auch denkbar, dass die beiden eine Störkante bildenden Wandabschnitte eine umlaufende Vertiefung im Schliesskörper und/oder im Gehäuse bilden. Auch mit einer derartigen Konfiguration wird eine Verwirbelung erreicht.

Wenn der Schliesskörper als Hohlkörper ausgebildet ist, ergibt die erfindungsgemässe Querschnittsform zusätzliche Vorteile, weil die Anordnung der Wandabschnitte im äussersten Umfangsbereich eine Federwirkung des Schliesskörpers begünstigt. Der Hohlkörper wirkt dabei wie eine Tellerfeder, welche Stösse in Axialrichtung aufnimmt. Damit wird verhindert, dass die Geschwindigkeit des Schliesskörpers beim Aufprall auf den Ventilsitz praktisch schlagartig auf null reduziert wird. Dieser Vorteil wird besonders dann erreicht, wenn der Schliesskörper aus Metallblech gefertigt ist und wenn er auf einem Führungsrohr befestigt ist. Der Schliesskörper kann dabei aus zwei identischen Schalen gebildet sein, die am Aussendurchmesser miteinander verbunden sind. Derartige Schalen lassen sich relativ leicht und kostengünstig durch Kaltdeformation, beispielsweise durch Tiefziehen und/oder Drücken z.B. aus Stahl oder Aluminium herstellen. Selbstverständlich könnte der Schliesskörper aber auch monolithisch hergestellt sein beispielsweise aus einem geeigneten Kunststoffmaterial oder aus Kautschuk. Je nachdem, ob das Explosionsschutzventil beidseitig oder nur einseitig wirkend ausgebildet ist, kann der Schliesskörper bezogen auf eine im rechten Winkel zur Mittelachse verlaufenden Ebene symmetrisch oder asymmetrisch ausgebildet sein.

Ausführungsbeispiele der Erfindung sind in den Zeichnung dargestellt und werden nachstehend genauer beschrieben. Es zeigen:
- Figur 1: ein Querschnitt durch ein Explosionsschutzventil mit dem Schliesskörper in Offenstellung,
- Figur 2: das Explosionsschutzventil gemäss Figur 1 mit dem Schliesskörper in Schliessstellung,
- Figur 3: ein Querschnitt durch den Schliesskörper gemäss den Fi- guren 1 und 2 in vergrössertem Massstab,
- Figur 4: ein Detail des Schliesskörpers gemäss Figur 3 am äu- ssersten Umfangsbereich in nochmals vergrössertem Mass- stab,
- Figur 5-7: weitere Ausführungsbeispiele des Schliesskörpers als Teilquerschnitte am Aussenumfang,
- Figur 8: ein Querschnitt durch einen nur einseitig wirkenden Schliesskörper,
- Figur 9: ein Teilquerschnitt durch ein alternatives Ausführungs- beispiel eines Explosionsschutzventils mit Störringen anstelle von Störkanten,
- Figur 10: ein Teilquerschnitt durch ein alternatives Ausführungs- beispiel mit einer Störkante am Gehäuse, und
- Figur 11: ein weiter abgewandeltes Ausführungsbeispiel mit zwei Störkanten am Gehäuse.

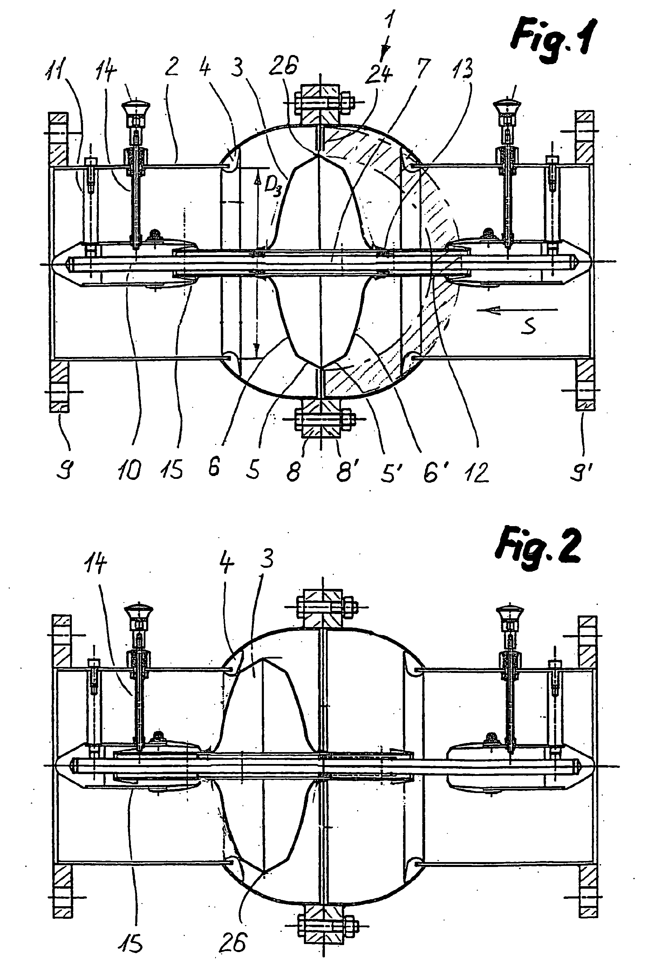

Wie in den Figuren 1 und 2 dargestellt, besteht ein Explosionsschutzventil 1 im wesentlichen aus einem Gehäuse 2 und aus einem darin verschiebbar gelagerten Schliesskörper 3. Das Gehäuse ist zweiteilig ausgebildet, wobei die beiden Gehäuseteile an den Mittelflanschen 8, 8' miteinander verschraubt sind. An den Aussenflanschen 9, 9' kann das Gehäuse in eine Rohrleitung integriert werden.

Der Schliesskörper 3 ist auf einem Führungsrohr 12 fixiert, das seinerseits in Richtung der Mittelachse 7 auf einer Führungsstange 10 geführt ist. Diese Führungsstange ist an beiden Enden mittels Halterungen 11 am Gehäuse 2 befestigt. Der Schliesskörper 3 wird mittels wenigstens einer Feder 13 in seiner in Figur 1 dargestellten neutralen Öffnungsstellung gehalten. Für die Offenhaltung bzw. Auslösung des Schliesskörpers sind allerdings verschiedene, hier nicht näher beschriebene Lösungen denkbar. Es wird in diesem Zusammenhang auf die eingangs erwähnten Vorpublikationen hingewiesen.

An beiden Enden des Führungsrohrs 12 ist je ein Fangkonus 15 angeordnet, der sich gegen das Ende hin verjüngt. Dieser Fangkonus wirkt mit einem unter Federvorspannung stehenden Arretierbolzen derart zusammen, dass in der in Figur 2 dargestellten Schliessstellung der Arretierbolzen hinter dem Fangkonus einrastet und auf diese Weise den Schliesskörper 3 in der Schliessstellung verriegelt. Der Schliesskörper wird dabei gegen den Ventilsitz 4 gepresst, der in der Regel aus einer elastischen Dichtung besteht.

Der Schliesskörper 3 bildet an seinem Aussendurchmesser mit den beiden zueinander geneigten Aussenwandabschnitten 5, 5' eine Störkante 26. Zwischen dieser Störkante und der Innenseite des Gehäuses 2 auf der Ebene zwischen den beiden Mittelflanschen 8, 8' wird ein kreisringförmiger Strömungsquerschnitt 24 gebildet, der mit strichpunktierten Linien als Umklappung dargestellt ist.

Beim dargestellten Ausführungsbeispiel ist eine Schliessbewegung und Fixierung des Schliesskörpers in beiden Bewegungsrichtungen möglich. Tritt beispielsweise in Strömungsrichtung s eine Explosionsdruckwelle auf, bewirkt der Druckstoss eine Verschiebung des Schliesskörpers in die gleiche Richtung in die Schliessstellung. Damit bildet der Schliesskörper eine sichere Barriere gegenüber Druck und Flammen bezüglich aller stromabwärts gelegenen Anlageteile. Durch Hochziehen des Arretierbolzens 14 wird der Schliesskörper freigegeben, worauf er unter Einwirkung der Feder 13 wieder in seine neutrale Ausgangslage zurückkehrt.

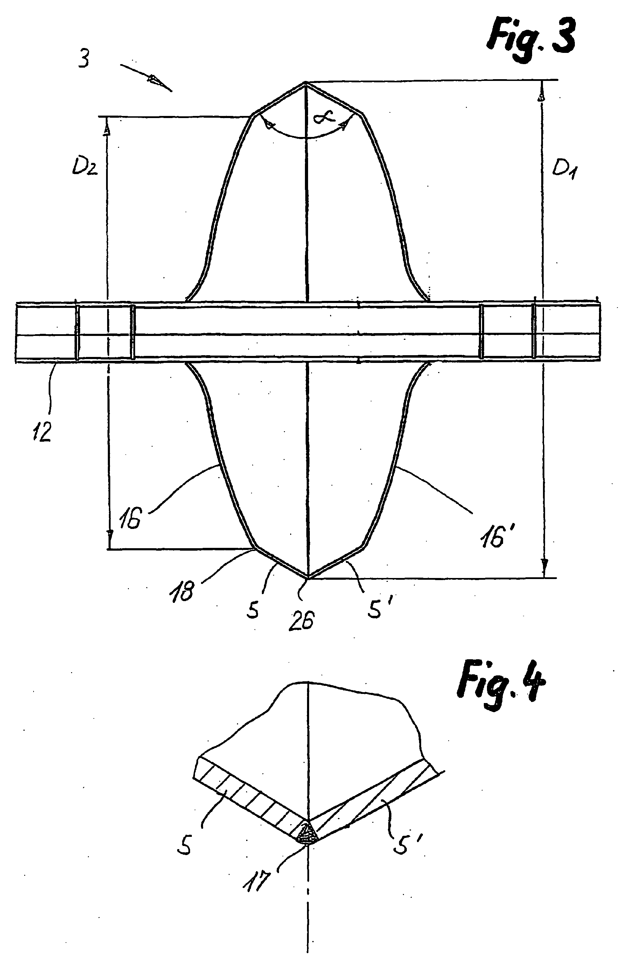

Die Figuren 3 und 4 zeigen weitere Details des Schliesskörpers 3. Dieser ist aus den Rotationssymmetrischen Hohlschalen 16, 16' zusammengesetzt, die aus Stahlblech gefertigt sind und die mit dem Führungsrohr 12 verschweisst sind. Eine umlaufende Schweissnaht 17 verläuft auch auf dem Aussendurchmesser D1. Dort stossen die beiden Aussenwandabschnitte 5, 5' unter einen Winkel α von beispielsweise 120° aufeinander. Dabei bildet sich ersichtlicherweise an der Schweissnaht 17 eine stumpfwinklige Kante. Der innen liegende Aussenwandabschnitt 6, 6' verläuft leicht gekrümmt und zwar entsprechend einer elliptischen Störkante 26. Unmittelbar im Umfangsbereich des Führungsrohrs 12 verläuft die Krümmung aus strömungstechnischen Gründen gegenläufig. Die beiden Aussenwandabschnitte 5, 5' stehen in einem Winkel zueinander und bilden damit ebenfalls einen Absatz bzw. eine Kante 18, die etwa auf dem Durchmesser D2 verläuft. Dieser Durchmesser ist gleich oder fast gleich wie der Durchmesser D3 des Ventilsitzes (Figur 1).

Ersichtlicherweise sind Abwandlungen des dargestellten Ausführungsbeispiels denkbar, ohne dass dabei der Gegenstand der Erfindung verlassen wird.

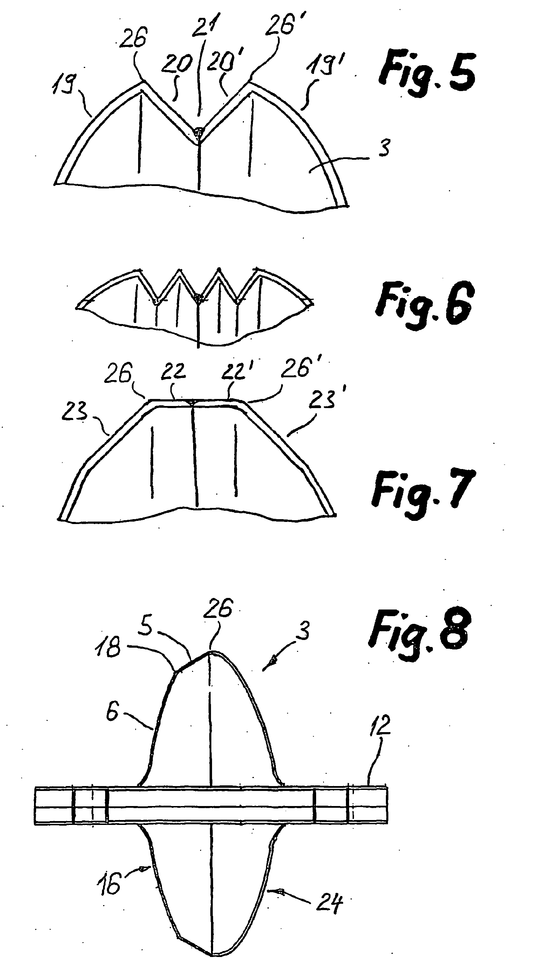

So zeigt beispielsweise Figur 5 eine Variante, bei welcher je zwei Aussenwandabschnitte 19, 20 bzw. 19', 20' eine umlaufende Vertiefung 21 im Schliesskörper 3 bilden. Beim Ausführungsbeispiel gemäss Figur 6 sind auf die gleiche Weise mehrere umlaufende Vertiefungen gebildet, so dass im Querschnitt eine Faltenbalg ähnliche Struktur entsteht.

Beim Ausführungsbeispiel gemäss Figur 7 wird durch die beiden Aussenwandabschnitte 22, 22' am Aussendurchmesser ein kurzer zylindrischer Abschnitt gebildet. Dieser steht in einem bestimmten Winkel zu den Aussenwandabschnitten 23, 23', sodass ebenfalls Störkanten 26, 26' gebildet werden.

Figur 8 zeigt einen Schliesskörper 3 für ein Ventil mit nur einem Ventilsitz. Die Schale 16 verfügt wie beschrieben über die beiden Aussenwandabschnitte 5 und 6, welche die Kante 18 bilden. Die Schale 24 die nicht an einem Ventilsitz anliegen muss, ist jedoch auf konventionelle Art elliptisch gekrümmt. Die beiden Schalen stossen aber unter einem Winkel von weniger als 180° aneinander.

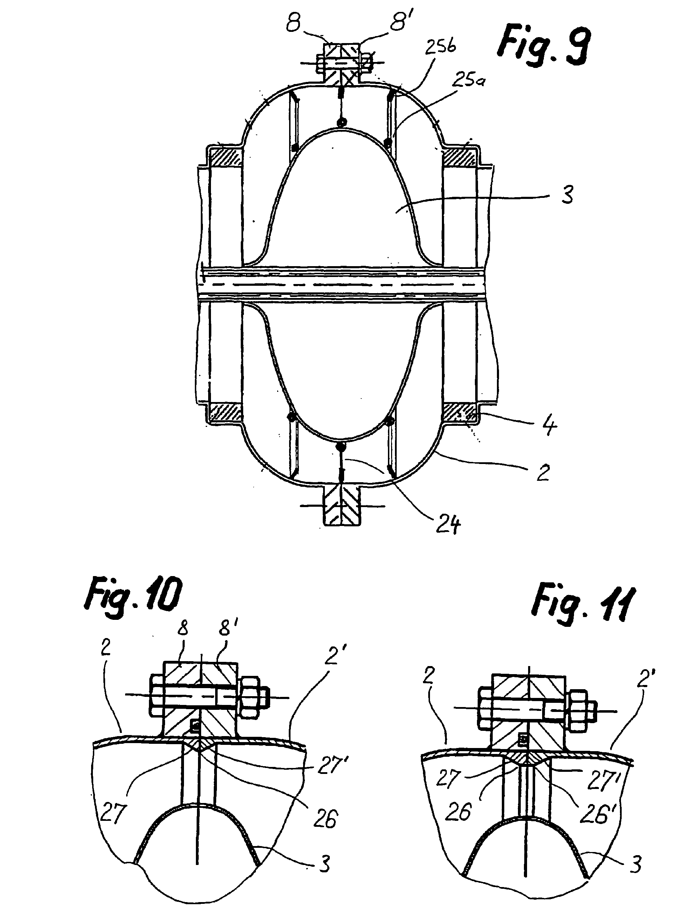

Beim Ausführungsbeispiel gemäss Figur 9 werden als Störmittel für die Beeinflussung der Strömung keine Störkanten, sondern Schikanen in der Form von Störringen eingesetzt. So sind auf der Innenseite des Gehäuses 2 an mehreren Stellen lamellenartige Störringe 25b angeordnet. Auf der Aussenseite des Schliesskörpers 3 sind dagegen kreisförmige Störringe 25a befestigt. Dabei kann es sich beispielsweise um angeschweisste Drahtringe handeln. Selbstverständlich wären auch andere ringartige Konfigurationen denkbar.

Die Ausführungsbeispiele gemäss den Figuren 10 und 11 zeigen wiederum Störmittel in der Form von Störkanten, die jedoch nicht am Schliesskörper 3, sondern auf der Innenseite des Gehäuses 2 angeordnet sind. Gemäss Figur 10 sind die beiden Gehäusehälften 2, 2' im aneinander stossenden Bereich etwas nach innen gezogen, sodass die zueinander geneigten Innenwandabschnitte 27, 27' eine Störkante 26 bildet. Es wäre allerdings auch denkbar, dass die beiden Innenwandabschnitt 27, 27' den beiden Mittelflanschen 8, 8' zugeordnet sind und dass die Gehäusehälften 2, 2' stumpf an den Flanschen 8, 8' anliegen.

Beim Ausführungsbeispiel gemäss Figur 11 ist die Konstruktion ähnlich wie beim Ausführungsbeispiel gemäss Figur 10. Die beiden Innenwandabschnitte 27, 27' stossen jedoch nicht direkt unter einem stumpfen Winkel aneinander, sondern im Bereich des kleinsten Innedurchmessers verbleibt ein hohlzylindrischer Abschnitt. Dabei entstehen zwei Störkanten 26, 26'. Ersichtlicherweise sind weitere Abwandlungen und Kombinationen denkbar. So könnten beispielsweise auch Störringe und Störkanten gemeinsam am Schliesskörper und oder am Gehäuse angeordnet sein.

## Patentansprüche

1. Explosionsschutzventil (1) mit einem Gehäuse (2) und mit einem innerhalb des Gehäuses geführten, rotationssymmetrischen Schliesskörper (3), der in einer neutralen Offenstellung haltbar ist und der unter der Einwirkung eines Staudrucks aus der Offenstellung in wenigstens eine Bewegungsrichtung (s) gegen einen Ventilsitz (4) in eine dichtende Schliessstellung pressbar und dort in der geschlossenen Position fixierbar ist, **dadurch gekennzeichnet, dass** auf der Aussenseite des Schliesskörpers (3) und/oder auf der Innenseite des Gehäuses (2), insbesondere im Bereich des zwischen dem Schliesskörper in der Offenstellung und dem Gehäuse gebildeten Strömungsquerschnitt (24) Störmittel (25, 25a, 26) zum Erzeugen einer turbulenten Strömung angeordnet sind, wobei die Störmittel wenigstens eine sich wenigsten teilweise entlang des Strömungsquerschnitts (24) erstreckende Störkante (26) aufweisen, an welcher wenigstens zwei Wandabschnitte unter einem Winkel von weniger als 180° aneinander stossen.

2. Explosionsschutzventil nach Anspruch 1, **dadurch gekennzeichnet, dass** gemeinsam mit der Störkante (26) in den Strömungsquerschnitt hineinragende Störringe (25a, 25b) am Schliesskörper und/oder am Gehäuse angeordnet sind.

3. Explosionsschutzventil nach einem der Ansprüche 1 oder 2, **dadurch gekennzeichnet, dass** die Störkante (26) am Schliesskörper und insbesondere an seinem Aussendurchmesser (D1) angeordnet ist.

4. Explosionsschutzventil nach Anspruch 3, **dadurch gekennzeichnet, dass** der Schliesskörper (3) wenigstens auf der dem Ventilsitz (4) zugewandten Seite bezogen auf seinen Querschnitt von seiner Mittelachse (7) bis zum Aussendurchmesser (D1) in wenigstens zwei verschieden geneigten bzw. gekrümmten Aussenwandabschnitten (5, 6 bzw. 5', 6') verläuft.

5. Explosionsschutzventil nach Anspruch 4, **dadurch gekennzeichnet, dass** die zwei verschieden geneigten bzw. gekrümmten Aussenwandabschnitte etwa im Durchmesserbereich (D3) des Ventilsitzes (4) aneinander stossen.

6. Explosionsschutzventil nach Anspruch 4 oder 5, **dadurch gekennzeichnet, dass** der Schliesskörper (3) bezogen auf seinen Querschnitt von seiner Mittelachse (7) bis zum Aussendurchmesser (D1) zuerst vorzugsweise elliptisch gekrümmt oder kegelförmig und dann kegelstumpfförmig verläuft.

7. Explosionsschutzventil nach Anspruch 1, **dadurch gekennzeichnet, dass** die Störkante (26) am Gehäuse und insbesondere im Verbindungsbereich zweier Gehäusehälften (2, 2') angeordnet ist.

8. Explosionsschutzventil nach einem der Ansprüche 1 bis 7, **dadurch gekennzeichnet, dass** die beiden eine Störkante bildenden Wandabschnitte unter einem Winkel (α) zwischen 60° bis 179°, vorzugsweise 120° aneinander stossen.

9. Explosionsschutzventil nach einem der Ansprüche 1 bis 8, **dadurch gekennzeichnet, dass** die beiden eine Störkante bildenden Wandabschnitte eine umlaufende Vertiefung im Schliesskörper und/oder im Gehäuse bilden.

10. Explosionsschutzventil nach einem der Ansprüche 1 bis 9, **dadurch gekennzeichnet, dass** der Schliesskörper (3) als Hohlkörper ausgebildet ist.

11. Explosionsschutzventil nach Anspruch 10, **dadurch gekennzeichnet, dass** der Schliesskörper aus Metallblech gefertigt ist und dass er auf einem Führungsrohr (12) befestigt ist.

12. Explosionsschutzventil nach Anspruch 10 oder 11, **dadurch gekennzeichnet, dass** der Schliesskörper (3) aus zwei identischen Schalen (16, 16') gebildet ist, die am Aussendurchmesser (D1) miteinander verbunden sind.

## Claims

1. Explosion protection valve (1) having a housing (2) and having a rotationally symmetrical closing body (3) which is guided within the housing and which can be held in a neutral open setting and which, under the influence of a dynamic pressure, can be pressed out of the open setting in at least one motional direction (s) against a valve seat (4) into a sealing close setting and can be secured there in the closed positon, **characterized in that** on the outer side of the closing body (3) and/or on the inner side of the housing (2), especially in the region of the flow area (24) formed between the closing body in the open setting and the housing, there are disposed interfering means (25, 25a, 26) for generating a turbulent flow, the interfering means having at least one interfering edge (26) which extends at least partially along the flow area (24) and at which at least two wall portions meet at an angle of less than 180°.

2. Explosion protection valve according to Claim 1, **characterized in that** interfering rings (25a, 25b) jutting into the flow area are disposed jointly with the interfering edge (26) on the closing body and/or on the housing.

3. Explosion protection valve according to one of Claims 1 or 2, **characterized in that** the interfering edge (26) is disposed on the closing body and especially on its outer diameter (D1).

4. Explosion protection valve according to Claim 3, **characterized in that** the closing body (3), at least on the side facing the valve seat (4), runs in relation to its cross section from its center axis (7) to the outer diameter (D1) in at least two differently inclined or curved outer wall portions (5, 6 and 5', 6').

5. Explosion protection valve according to Claim 4, **characterized in that** the two differently inclined or curved outer wall portions meet approximately in the diametral region (D3) of the valve seat (4).

6. Explosion protection valve according to Claim 4 or 5, **characterized in that** the closing body (3) runs in relation to its cross section from its center axis (7) to the outer diameter (D1), to begin with preferably in an elliptically curved or conical, and then in a frustoconical path.

7. Explosion protection valve according to Claim 1, **characterized in that** the interfering edge 26 is disposed on the housing and, in particular, in the connecting region of two housing halves (2, 2').

8. Explosion protection valve according to one of Claims 1 to 7, **characterized in that** the two wall portions forming an interfering edge meet at an angle (α) between 60° and 179°, preferably 120°.

9. Explosion protection valve according to one of Claims 1 to 8, **characterized in that** the two wall portions forming an interfering edge form a circumferential recess in the closing body and/or in the housing.

10. Explosion protection valve according to one of Claims 1 to 9, **characterized in that** the closing body (3) is configured as a hollow body.

11. Explosion protection valve according to Claim 10, **characterized in that** the closing body is made from sheet metal and **in that** it is fastened on a guide tube (12).

12. Explosion protection valve according to Claim 10 or 11, **characterized in that** the closing body (3) is formed from two identical shells (16, 16'), which are joined together on the outer diameter (D1).

## Revendications

1. Clapet antidéflagrant (1) comprenant un boîtier (2) et un corps de fermeture (3) à symétrie de révolution, guidé à l'intérieur du boîtier, qui peut être retenu dans une position ouverte neutre et qui peut être pressé sous l'effet d'une pression de compression hors de la position d'ouverture dans au moins une direction de déplacement (s) contre un siège de clapet (4) dans une position de fermeture étanche, et qui peut y être fixé dans la position fermée, **caractérisé en ce que** du côté extérieur du corps de fermeture (3) et/ou du côté intérieur du boîtier (2), en particulier dans la région de la section transversale d'écoulement (24) formée entre le corps de fermeture dans la position d'ouverture et le boîtier, des moyens de turbulence (25, 25a, 26) sont disposés pour produire un écoulement turbulent, les moyens de turbulence présentant au moins une arête de turbulence (26) s'étendant au moins en partie le long de la section transversale d'écoulement (24), sur laquelle au moins deux portions de paroi butent l'une contre l'autre en formant un angle inférieur à 180°.

2. Clapet antidéflagrant selon la revendication 1, **caractérisé en ce que** conjointement avec l'arête de turbulence (26), des bagues de turbulence (25a, 25b) pénétrant dans la section transversale d'écoulement sont disposées sur le corps de fermeture et/ou sur le boîtier.

3. Clapet antidéflagrant selon l'une quelconque des revendications 1 ou 2, **caractérisé en ce que** l'arête de turbulence (26) est disposée sur le corps de fermeture et notamment sur son diamètre extérieur (D1).

4. Clapet antidéflagrant selon la revendication 3, **caractérisé en ce que** le corps de fermeture (3) s'étend au moins du côté tourné vers le siège de clapet (4) par rapport à sa section transversale, depuis son axe médian (7) jusqu'au diamètre extérieur (D1) dans au moins deux portions de paroi extérieure (5, 6, respectivement 5', 6') courbées ou inclinées différemment.

5. Clapet antidéflagrant selon la revendication 4, **caractérisé en ce que** les deux portions de paroi extérieure inclinées ou courbées différemment butent l'une contre l'autre approximativement dans la région du diamètre (D3) du siège de clapet (4).

6. Clapet antidéflagrant selon la revendication 4 ou 5, **caractérisé en ce que** le corps de fermeture (3), par rapport à sa section transversale, section transversale depuis son axe médian (7) jusqu'au diamètre extérieur (D1) d'abord avec une courbure perpendiculairement elliptique ou conique, puis tronconique.

7. Clapet antidéflagrant selon la revendication 1, **caractérisé en ce que** l'arête de turbulence (26) est disposée sur le boîtier et notamment dans la région de connexion de deux moitiés de boîtier (2, 2').

8. Clapet antidéflagrant selon l'une quelconque des revendications 1 à 7, **caractérisé en ce que** les deux portions de paroi formant une arête de turbulence butent l'une contre l'autre en formant un angle (α) compris entre 60° et 179°, de préférence de 120°.

9. Clapet antidéflagrant selon l'une quelconque des revendications 1 à 8, **caractérisé en ce que** les deux portions de paroi formant une arête de turbulence forment un renfoncement périphérique dans le corps de fermeture et/ou dans le boîtier.

10. Clapet antidéflagrant selon l'une quelconque des revendications 1 à 9, **caractérisé en ce que** le corps de fermeture (3) est réalisé sous forme de corps creux.

11. Clapet antidéflagrant selon la revendication 10, **caractérisé en ce que** le corps de fermeture est fabriqué en tôle métallique et **en ce qu'**il est fixé sur un tube de guidage (12).

12. Clapet antidéflagrant selon l'une quelconque des revendications 10 ou 11, **caractérisé en ce que** le corps de fermeture (3) est formé de deux coques (16, 16') identiques, qui sont connectées l'une à l'autre au niveau du diamètre extérieur (D1).
